# EUROPEAN PATENT SPECIFICATION

(11) **EP 0 693 634 B1**
(45) Date of publication and mention of the grant of the patent: **12.05.1999**
(21) Application number: 95111358.8
(22) Date of filing: 19.07.1995
(51) Int. Cl.: F16D 65/16, F16J 3/04

(54) **Vented sealing boot for disc brakes**
Entlüftete Dichtungsmanschette für Scheibenbremsen
Manchette d'étanchéité à évent pour freins à disque

(30) Priority: 19.07.1994 JP 188800/94
(43) Date of publication of application: 24.01.1996
(73) Proprietor: NISSHINBO INDUSTRIES INC., Chuo-ku, Tokyo (JP)
(72) Inventor: Harinaga, Toshiyuki, c/o Nisshnibo Ind. Inc., Nagoya-shi, Aichi (JP)
(74) Representative: Sajda, Wolf E., Dipl.-Phys.

(56) References cited:
- DE-A- 1 931 708
- FR-A- 2 642 810
- GB-A- 2 192 675

## Description

The present invention relates to a disk brake device comprising a rotating disk rotating in tandem with a wheel, a pair of friction pads sandwiching and pressing against the rotating disk in order to create friction, a caliper which straddles a portion of the circumference of the rotating disk and the friction pads, wherein at least one piston is provided in the caliper in order to press the friction pads against the rotating disk in order to create a braking effect.

A conventional disk brake device is disclosed, for example, in Japan utility model application publication No. JP-Y2-62-38 032 where the disk brake device comprises a sliding pin which is applicable to a piston of the disk brake. In the prior-art construction, the sliding pin is cantilevered to the one side of the caliper or support, and the piston sliding back and forth in a cavity molded in the other side of the caliper, or support, moves the caliper back and forth in the axial direction of the rotating disk. A seal is provided around the parameter of the cavity in order to form an airtight sealing with the circumference of the piston. For the purpose of sealing off, the sliding surface of the piston and the cylinder cavity, a peripheral groove, into which a boot is set, is provided around the circumference of the piston from the rim of the sliding cavity, and a depressed channel, with a passage into the peripheral groove, extends towards the free end of the piston over a length virtually equal to the width of the peripheral groove and slightly longer than the dimension of the seal in the axial direction.

Such a conventional disk brake device, however, presents considerable problems as explained hereinafter.
- The sliding pin is inserted into a pouch-shaped caliper boss which is closed at the rear end, while the open end is sealed tightly by a seal. Accordingly, air inside the caliper boss remains compressed until the sliding pin is inserted up to a point where the depression passes through the seal, which makes it difficult to install such a sliding pin.
- Moreover, since the depression penetrates through the seal in order to exhaust the compressed air, the seal is damaged by the edge of the depression which reduces considerably the tightness of the seal and shortens the seal's useful lifetime.
- Normally, the expendable end of the boot is elastically affixed to the periperal groove around the guide pin with an interference fit. Therefore, the width, i.e. the dimension in the axial direction, of the expandable end of the boot is set to be wider than the width of the guide pin groove. Moreover, since the width of the peripheral groove is set to be equal to the axial length of the depression, the width of the expandable end of the boot becomes longer than the axial length of the depression. The result is that the expandable end of the boot covers the depression and makes it difficult for any air inside the boot to be exhausted externally, thereby cancelling the purpose of the depression.

A conventional disk brake device as disclosed for example in DE-A-1 931 708 has a rotating disk rotating in tandem with a wheel. A pair of friction pads sandwiching and pressing against the rotating disk are provided to create friction. A caliper straddles a portion of a circumference of the rotating disk. One or more pistons are housed in the caliper in order to slide within a cylinder cavity bored into the caliper and push the friction pads against the rotating disk when being operated. A seal fitted into a ring-shaped groove and provided around an inner face of the cylinder cavity is designed to maintain a fluid-tight seal with the piston. A dust boot is installed between an open end of the cylinder cavity and a ring-shaped boot groove provided on a circumference of the piston to seal off the sliding surface thereof.

The assembling process of such a piston is as follows:
- A boot is installed in the caliper.
- Compressed air is introduced into the cylinder while a piston is pressed against the boot.
- The boot is expanded to be elastically affixed to the circumference of the piston.
- The piston is then inserted into the cylinder cavity of the caliper.
- Thereafter, the boot is affixed to a boot groove of the piston.

In such an assembling process, the following problems arise: During the second step, compressed air is introduced into the piston, the boot and the piston seal in order to cause thereby an excessive expansion of the boot. This excessive expansion of the boot causes the boot to be put out of joint from the piston. In order to prevent such a disconnection, a stick may be inserted between the piston and the boot to exhaust the compressed air.

The object underlying the present invention is to provide a disk brake device eliminating the problems of conventional devices and facilitating the mounting of the disk brake device so that damages to the seal are prevented.

The object is solved in an advantageous and satisfying manner by a disk brake device according to the invention comprising a rotating disk rotating in tandem with a wheel, a pair of friction pads sandwiching and pressing against the rotating disk to create friction, a caliper which straddles a portion of the circumference of the rotating disk and the friction pads, one or more pistons housed in the caliper to slide within a cylinder cavity bored into the caliper and which push the friction pads against the rotating disk. Furthermore, a seal is fitted into a ring-shaped groove provided around the inner face of the cylinder cavity in order to maintain fluid-tight seal with the piston, and a dust boot is installed between the open end of the cylinder cavity and a ring-shaped boot groove provided on the circumference of the piston to seal off the sliding surfaces. According to the invention, one or more air vent grooves extend from the boot groove towards the bottom of the piston, and along the axial length of the piston, wherein the length of that leg of the dust boot inserted into the piston is shorter than the length of the air vent groove, and the length from the bottom face of the piston to the rear end of the air vent groove is longer than the length from the bottom face of the cylinder cavity to the front end of the seal groove.

Further aspects, advantages and features according to the invention will be explained in more detail with reference to preferred embodiments and the accompanying drawings.
- Fig. 1: is a cross-section diagram of an internally expanding disk brake device according to a first embodiment of the invention.
- Fig. 2: is a side view of the disk brake device according to the invention from the right hand side in Fig. 1.
- Fig. 3: is a plan view of the disk brake device according to the invention, partly in cross-section.
- Fig. 4: is an explanatory diagram of a boot groove and an air vent groove provided on the piston side of the device.
- Fig. 5: is a cross-section diagram along the line V-V in Fig. 4.
- Fig. 6: is a diagram for explaining the assembly of an internally expanding disk brake device according to the invention.

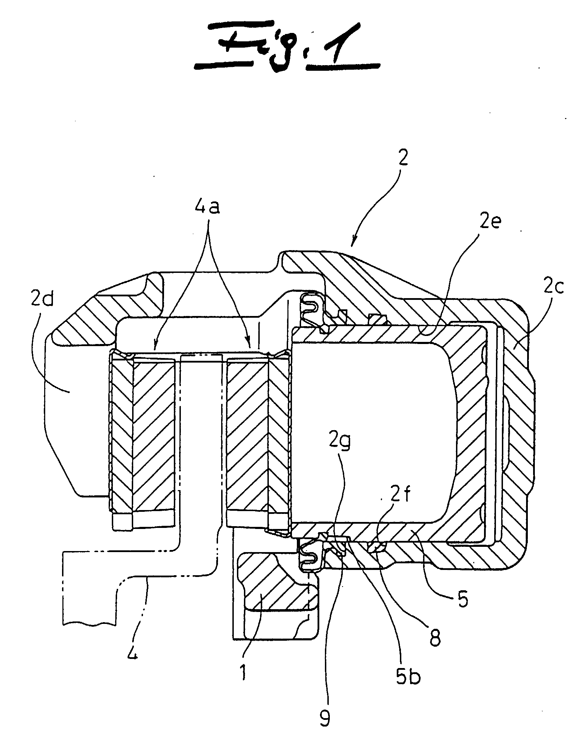

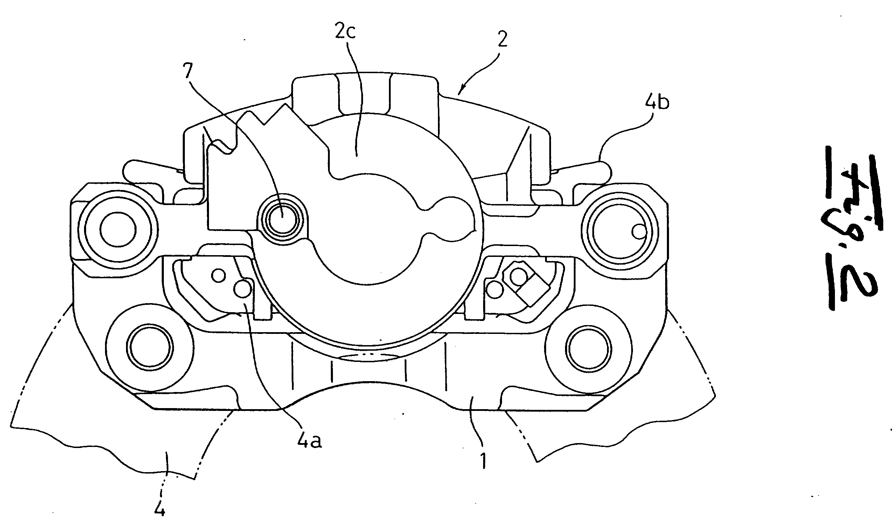

### General Outline of the Disk Brake Device (Figs. 1 to 3)

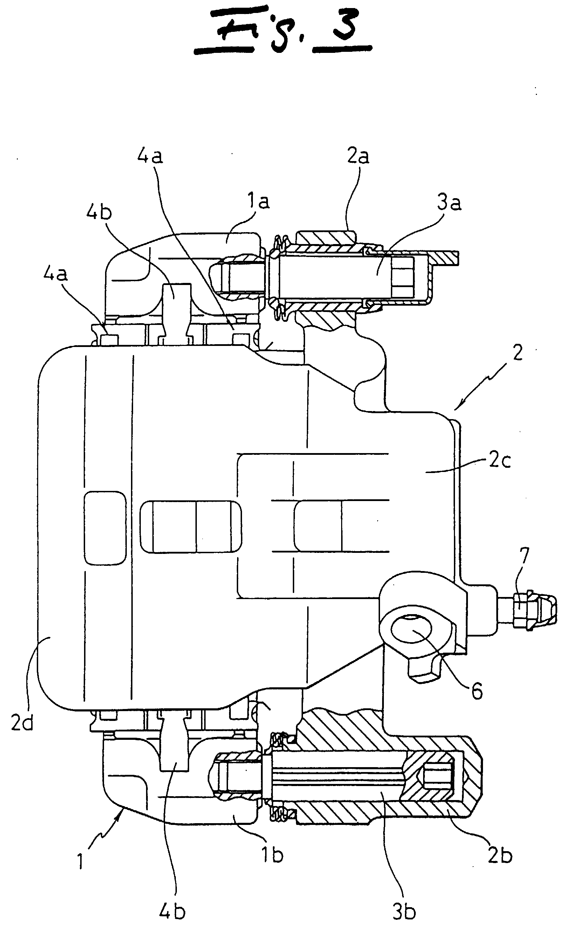

The disk brake device comprises a caliper 2 which is positioned and set to move horizontally relative to a fixed frame 1 affixed to a chassis, for example of an automobile. As shown in Fig. 3, arms la and 1b are provided on each end of the fixed frame 1, and one end of guide pins 3a and 3b, respectively, is mounted onto each arm la, 1b, respectively, while the other end is inserted into a wing 2a and 2b, respectively, of the caliper 2. Such a configuration enables the caliper 2 to slide and retract relative to the fixed frame 1.

A hydraulic reaction chamber 2d extends from a cylinder 2c between the wings 2a and 2b and straddles a rotating disk 4. Inside the caliper 2, a cylinder cavity 2e is bored having its open end adjacent to the hydraulic reaction chamber 2d. Inside the cylinder cavity 2e, there is a piston 5 which is set to slide towards the hydraulic reaction chamber 2d.

A pair of facing friction pads 4a one of which is set adjacent to the cylinder 2c and the other of which is provided adjacent to the hydraulic reaction chamber 2d, respectively, are sandwiching the rotating disk 4, and these friction pads 4a are mounted to slide along the arms la and 1b of the fixed frame 1 by means of pad springs 4b (see Fig. 3) which serve a dual purpose as pad liners.

### Caliper (Figs. 1 to 3)

The caliper 2 straddles the rotating disk 4 and has the cylinder 2c on the one side thereof in which the cylinder cavity 2e is formed. A ring-shaped seal groove 2f is provided around the inner surface of the cylinder cavity 2e, and a ring-shaped boot groove 2g is provided in the inner surface of the cylinder cavity 2e and located closer to the open end of the cylinder cavity 2e. At the bottom of the cylinder 2c, a fluid inlet 6 is provided for introducing a brake fluid, whereas an air bleeder 7 is screwed to the caliper 2 in order to exhaust the fluid.

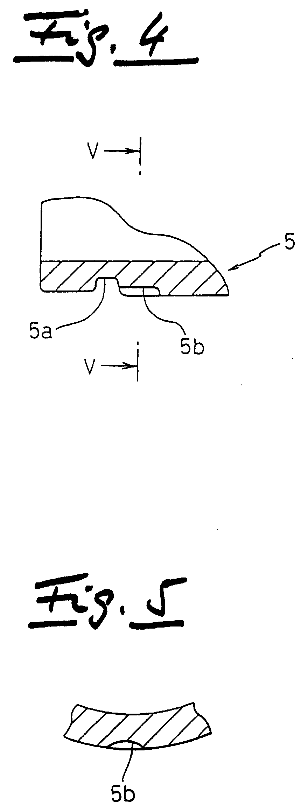

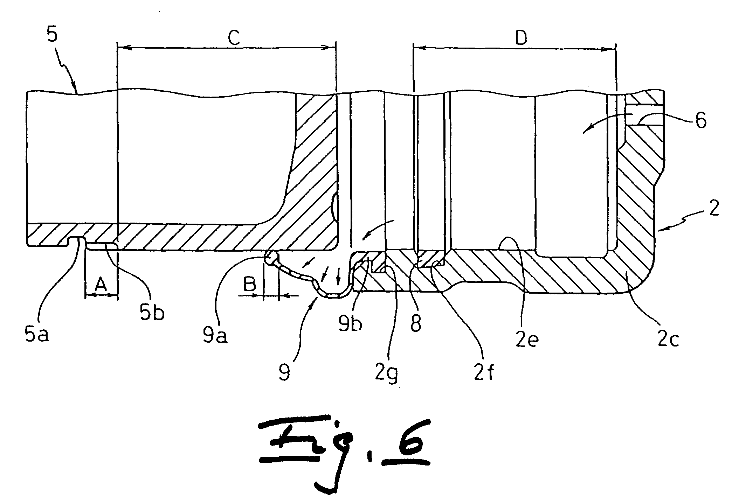

### Piston (Figs. 1, 4, 5 and 6)

Inside the cylinder cavity 2e, the piston 5 is housed in order to slide inside that cavity. A cup-shaped boot groove 5a is provided around its circumference near the open end of the cylinder cavity 2e. Also, one or more air vent grooves 5b are provided in the outer surface of the piston 5 so that they extend from the boot groove 5a towards the bottom of the piston 5.

### Sealing Device (Figs. 1 and 6)

A seal 8 is fitted into the ring-shaped seal groove 2f provided around the inner surface of the cylinder cavity 2e in order to maintain a fluid-tight seal with the piston 5. Once the piston 5 has been pushed forward, a release of the brake pedal causes the seal 8 to elastically deform inside the seal groove 2f generating a retractive force on the piston 5.

### Dust Boot (Fig. 6)

In order to seal off the sliding surfaces of the piston 5 and the cylinder cavity 2e, a dust boot 9 is provided which has two legs 9a and 9b. The one leg 9a is squeezed with an appropriate force into a ring-shaped boot groove 5a provided around the circumference of the piston 5. The other leg 9b is fitted into the ring-shaped boot groove 2g provided around the inner surface of the cylinder cavity 2b, thereby sealing off the sliding surfaces of the piston 5 and the cylinder cavity 2e from dust and/or water. In order to accommodate the in-and-out motion of the piston 5, the central portion of the dust boot 9 is formed like a bellows.

The seal 8 and the dust boot 9 are each made from suitable commercially available materials, such as rubber, synthetic resin, or other pliable material.

### Dimensions and Relationship of Important Components

In the disk brake device according to the invention, the axial length A of the respective air vent grooves 5b provided in the circumference of the piston 5 is longer than the axial length B of the leg 9a of the dust boot 9 fitted into the boot groove 5a of the piston 5. This ensures that the compressed air accumulated within the dust boot 9 is exhausted via such air vent grooves 5b, thereby reducing the pressure inside the dust boot 9 in order to facilitate the assembly of the piston 5. Otherwise, if the length A is less than the length B, the compressed air within the dust boot 9 is not adequately exhausted, and the pressure therein makes it difficult to assemble the piston 5.

Moreover, in the disk brake device according to the present invention, the length C from the bottom face of the piston 5 to the back end of the respective air vent grooves 5b is longer than the length D from the bottom face of the cylinder cavity 2e to the front end of the seal groove 2f in order to maintain a fluid-tight seal with the piston 5. Otherwise, if the length C is less than the length D, and if the piston 5 is pushed to the right, i.e. to the bottom of the cylinder cavity 2e, the seal 8 of the cylinder cavity 2e would extend right up to the respective air vent grooves 5b in the piston 5, in which case a fluid-tight seal cannot be maintained.

### Assembly of the Disk Brake Device

In the following, the assembly of the disk brake device is explained in more detail with reference to Fig. 1 and Fig. 6.

In a first step, the seal 8 is mounted. For this purpose, the seal 8 is fitted into the ring-shaped seal groove 2f provided aroung the inner surface of the cylinder cavity 2e of the caliper 2. In such a manner, a fluid-tight seal is achieved with the piston 5.

In a second step, the dust boot 9 is mounted. For this purpose, the leg 9b of the dust boot 9 is fitted into the boot groove 2g provided close to the open end of the cylinder cavity 2e.

In a third step, compressed air is introduced. Namely, the bottom of the piston 5 is set close to the open end of the cylinder cavity 2e, and compressed air is introduced into the cylinder cavity 2e from the fluid inlet 6 provided at the bottom of the cylinder 2c. For example, the pressure is in the range from 1,5 to 3 bar. The introduction of the compressed air causes the dust boot 9 to expand, wherein the free leg 9a is elastically affixed to the circumference of the piston 5.

In a fourth step, the piston 5 is inserted into the cylinder cavity 2e of the caliper 2. The supply of compressed air from the fluid inlet 6 to the cylinder 2c can be stopped when the bottom of the piston 5 has passed through the seal 8 fitted into the seal groove 2f of the cylinder cavity 2e.

In a fifth step, air is bleeded from the assembly. Namely, the compressed air accumulated inside the dust boot 9 is exhausted via the one or more air vent grooves 5b provided around the circumference of the piston 5. That is, as the piston 5 is inserted further into the cylinder cavity 2e, the respective air vent grooves 5b provided on the piston 5 take a position beyond the leg 9a of the dust boot 9, and at this point, the compressed air is exhausted via the respective air vent grooves 5b, and the dust boot 9, swollen with compressed air supplied from the fluid inlet 6, will return to its normal state.

When the assembly of the disk brake-device is carried out as described above, as the piston 5 is inserted close to the bottom of the cylinder cavity 2e, the leg 9a of the dust boot 9 is transferred and moved smoothly from the respective air vent grooves 5b provided around the circumference of the piston 5 and fitted into the boot groove 5a, thereby preventing any damage to the leg 9a.

The embodiment of the disk brake device according to the invention as described above is applied to a fist-shaped sliding pin disk brake. However, the invention is not restricted to such a type of a disk brake device, rather the invention can also be applied to disk brakes having an opposed piston, a swinging caliper, an open top and a variety of other disk brakes.

With the construction and configuration of the disk brake device according to the invention, the following advantages are achieved.

When assembling the disk brake device, compressed air introduced from the fluid inlet 6 and accumulated in the dust boot 9 can be exhausted via the air vent grooves 5b provided around the circumference of the piston 5. Such a configuration makes it extremely easy to assemble the device.

Moreover, the axial length of the leg 9a of the dust boot 9 is shorter than the axial length of the respective air vent groove 5b, and in this case, the leg 9a does not cover the air vent groove 5b so that the compressed air within the dust boot 9 can be adequately exhausted via such an air vent groove 5b. Again, such a configuration makes it extremely easy to assemble the device.

Furthermore, the length D from the bottom face of the cylinder cavity 2e to the front end of the seal groove 2f is shorter than the length C from the bottom face of the piston 5 to the back end of the air vent groove 5b. Hence, during assembly, even if the piston 5 were to be pushed down to the bottom face of the cylinder cavity 2e, the air vent groove 5b will not catch on the seal 8. This prevents any damage to the seal 8 increasing its lifetime considerably.

## Claims

1. A disk brake device comprising
- a rotating disk (4) rotating in tandem with a wheel,
- a pair of friction pads (4a) sandwiching and pressing against the rotating disk (4) in order to create friction,
- a caliper (2) which straddles a portion of the circumference of the rotating disk (4) and the friction pads (4a),
- one or more pistons (5) housed in the caliper (2) to slide within a cylinder cavity (2e) bored into the caliper (2) and which push the friction pads (4a) against the rotating disk (4),
- a seal (8) fitted into a ring-shaped groove (2f) provided around the inner surface of the cylinder cavity (2e) in order to maintain a fluid-tight seal with the piston (5), and
- a dust boot (9) installed between the open end of the cylinder cavity (2e) and a ring-shaped boot groove (5a) provided in the circumference of the piston (5) to seal off the sliding surfaces,
wherein one or more air vent grooves (5b) are provided which extend from the boot groove (5a) towards the bottom of the piston (5), and along the axial length of the piston (5),
wherein the length (B) of the leg (9a) of the dust boot (9) inserted into the piston (5) is shorter than the length (A) of the respective air vent groove (5b),
and wherein the length (C) from the bottom face of the piston (5) to the rear end of the air vent groove (5b) is longer than the length (D) from the bottom face of the cylinder cavity (2e) to the front end of the seal groove (2f).

## Revendications

1. Dispositif de freinage à disque comprenant
- un disque (4) tournant avec une roue,
- deux patins de frottement (4a) placés de part et d'autre du disque (4) et exerçant une pression sur celui-ci pour créer un frottement,
- un étrier (2) qui chevauche une partie de la circonférence du disque (4) et les patins de frottement (4a),
- un ou plusieurs pistons (5) montés dans l'étrier (2) pour coulisser dans une cavité de cylindre (2e) percée dans l'étrier (2) et qui poussent les patins de frottement (4a) contre le disque (4),
- un joint d'étanchéité (8) placé dans une gorge annulaire (2f) prévue autour de la face intérieure de la cavité de cylindre (2e) pour maintenir un joint étanche au fluide avec le piston (5), et
- une manchette pare-poussière (9) montée entre l'extrémité ouverte de la cavité de cylindre (2a) et une gorge annulaire (5a) prévue dans la circonférence du piston (5) pour obturer les surfaces glissantes,
dans lequel il est prévu une ou plusieurs rainures évents (5b) qui s'étendent à partir de la gorge à manchette (5a) vers le fond du piston (5) et le long de la longueur axiale du piston (5),
dans lequel la longueur (B) du talon (9a) de la manchette pare-poussière (9) engagé dans le piston (5) est inférieure à la longueur (A) de la rainure évent respective (5b),
et dans lequel la distance (C) de la face de fond du piston (5) à l'extrémité arrière de la rainure évent (5b) est supérieure à la distance (D) de la face de fond de la cavité de cylindre (2e) à l'extrémité avant de la gorge à joint (2f).

## Patentansprüche

1. Scheibenbremsenvorrichtung, die folgendes aufweist:
- eine rotierende Scheibe (4), die sich zusammen mit einem Rad dreht,
- ein Paar von Bremsbelägen (4a), die sandwichartig zu der rotierenden Scheibe (4) angeordnet sind und gegen die rotierende Scheibe (4) drücken, um eine Reibung zu erzeugen,
- einen Bremssattel (2), der einen Bereich des Umfanges der rotierenden Scheibe (4) und die Bremsbeläge (4a) überspannt,
- einen oder mehrere Kolben (5), die in dem Bremssattel (2) untergebracht sind, um in einer Zylinderaussparung (2e) zu gleiten, die in den Bremssattel (2) gebohrt ist, und die die Bremsbeläge (4a) gegen die rotierende Scheibe (4) drücken,
- eine Dichtung (8), die in eine ringförmige Nut (2f) eingepaßt ist, welche um die Innenoberfläche der Zylinderaussparung (2e) herum vorgesehen ist, um eine fluiddichte Dichtung mit dem Kolben (5) aufrechtzuerhalten, und
- eine Staubschutzmanschette (9), die zwischen dem offenen Ende der Zylinderaussparung (2e) und einer ringförmigen Manschettennut (5a) installiert ist, die in dem Umfang des Kolbens (5) vorgesehen ist, um die Gleitoberflächen abzudichten,
wobei eine oder mehrere Luftablaßnuten (5b) vorgesehen sind, die sich von der Manschettennut (5a) aus zu dem Boden des Kolbens (5) hin erstrecken und längs der axialen Länge des Kolbens (5) verlaufen,
wobei die Länge (B) des Schenkels (9a) der Staubschutzmanschette (9), der in den Kolben (5) eingesetzt ist, kürzer ist als die Länge (A) der jeweiligen Luftablaßnut (5b), und
wobei die Länge (C) von der Bodenfläche des Kolbens (5) zu dem hinteren Ende der Luftablaßnut (5b) größer ist als die Länge (D) von der Bodenfläche der Zylinderausnehmung (2e) zu dem vorderen Ende der Dichtungsnut (2f).
